(19) Europäisches Patentamt
European Patent Office
Office européen des brevets

(11) Numéro de publication : **0 465 304 A1**

(12) # DEMANDE DE BREVET EUROPEEN

(21) Numéro de dépôt : **91401735.5**

(22) Date de dépôt : **26.06.91**

(51) Int. Cl.$^5$ : **C02F 3/06,** C02F 3/24, A01K 63/04

(30) Priorité : **27.06.90 FR 9008123**

(43) Date de publication de la demande : **08.01.92 Bulletin 92/02**

(84) Etats contractants désignés : **AT BE CH DE DK ES GB GR IT LI LU NL SE**

(71) Demandeur : **EEL D'YEU**
**rue de la Glacière, Port Joinville**
**F-85350 Ile d'Yeu (FR)**

(72) Inventeur : **Huzar, Matthieu**
**Rue du Paradis**
**F-85350 Ile D'Yeu (FR)**
Inventeur : **Huzar, Emmanuel**
**16, rue Gustave Courbet**
**F-75116 Paris (FR)**

(74) Mandataire : **Gutmann, Ernest et al**
**Ernest Gutmann - Yves Plasseraud S.A., 67, boulevard Haussmann**
**F-75008 Paris (FR)**

(54) **Procédé et dispositif de purification d'une eau polluée en déchets azotés.**

(57) Procédé de purification d'une eau polluée en déchets azotés solubles et insolubles par traitement physico-chimique et biologique et dispositif mettant en oeuvre un tel procédé, comprenant la filtration par passage de bas en haut de l'eau au travers d'un lit (22) fixe, immergé, de matériau granulaire (23) chargé en biomasse (13). Le procédé est caractérisé en ce que, directement avant filtration, on complète l'oxygènation de l'eau polluée avec de l'air, en déversant gravitairement, en chute verticale (11), l'eau polluée au-dessus des moyens (30) d'alimentation du lit en partie basse (12).

EP 0 465 304 A1

FIG.1

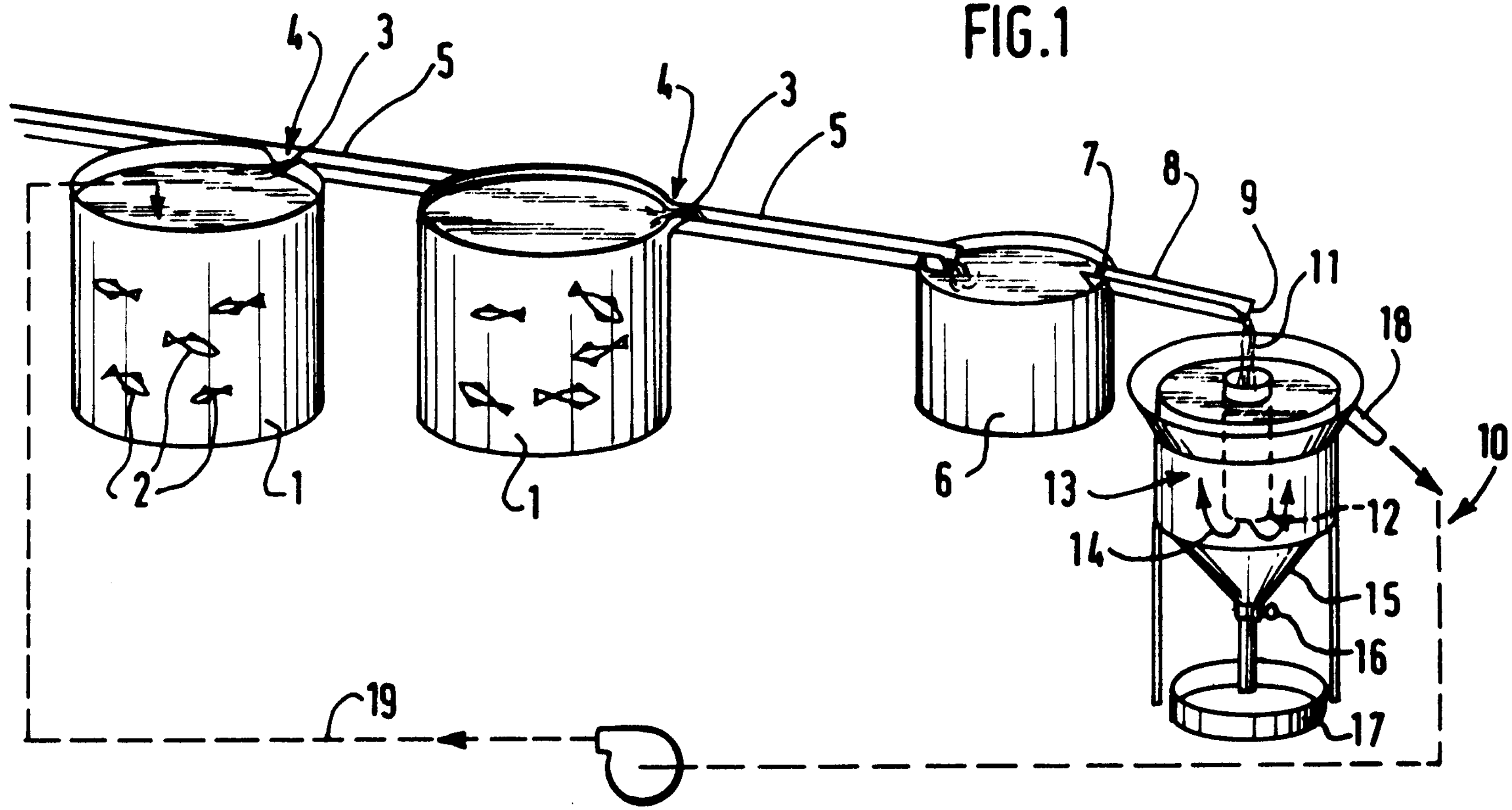

La présente invention concerne un procédé de purification d'eau polluée en déchets azotés solubles et insolubles, par traitement physico-chimique et biologique, et un dispositif mettant en oeuvre un tel procédé, du type comprenant une filtration par passage de bas en haut de l'eau au travers d'un lit fixe, immergé, de matériau granulaire chargé en biomasse.

Par matériau granulaire, il faut entendre un matériau poreux, du type argile expansé, ou billes de matière plastique microporeuse, de granulométrie comprise par exemple entre quelques dizièmes de millimètres et quelques millimètres.

Par biomasse, il faut entendre un matériau vivant, constitué notamment de bactéries, par exemple, du type connu sous la dénomination Nitrosomas et sous la dénomination Nitrobacter; les déchets azotés traités sont par ailleurs essentiellement constitués d'urée et/ou autres déchets d'alimentation comprenant des macromolécules organiques.

L'invention trouve une application particulièrement importante, bien que non exclusive, dans le domaine de l'épuration de l'eau polluée provenant de l'élevage intensif ou semi-intensif de poissons, ou dans le domaine du traitement des déchets agricoles issus des déjections animales, par exemple ovines ou porcines. L'eau polluée peut être de l'eau douce, ou de l'eau de mer, prévue, ou non, pour être réutilisée après épuration.

on connaît déjà des dispositifs de purification, par voie biologique, d'eaux polluées sur lit de matériau granulaire.

Par exemple, le document FR 2.604.990 décrit un procédé de filtration par passage de bas en haut d'une eau polluée au travers d'un filtre en colonne. L'eau à épurer est acheminée, sans décontamination préalable, de bas en haut de la colonne comprenant un lit granulaire multicouches; un point d'injection de gaz oxygéné détermine deux zones du lit successives, à savoir une zone dite d'anaérobie et une zone dite d'aérobie, permettant l'épuration biologique des déchets. Ce procédé n'est pas spécifiquement destiné au traitement des eaux polluées en déchets azotés, mais au traitement de tout type d'eaux résiduaires.

Il est, de plus, complexe et nécessite une installation relativement volumineuse. Les eaux polluées doivent être alimentées en pression, en bas de colonne, tout comme le gaz oxygéné, en milieu de colonne.

La présente invention vise à fournir un procédé et un dispositif répondant mieux que ceux antérieurement connus aux exigences de la pratique, notamment en ce qu'elle est facile à mettre en oeuvre, qu'elle ne présente pas, ou peu, de risque de colmatage, et qu'elle permet un accès et un entretien facile de la biomasse utilisée, sans nécessiter l'alimentation en pression d'un gaz d'oxygénation ou des eaux polluées à traiter. L'invention permet surtout une réduction importante des boues d'origine animale et le recyclage d'une partie au moins des eaux usées (jusqu'à de l'ordre de 90%), ce qui autorise d'importantes économies de coût.

Dans ce but, l'invention propose essentiellement un procédé de purification d'une eau polluée en déchets azotés solubles et insolubles par traitement physico-chimique et biologique, comprenant la filtration par passage de bas en haut de l'eau au travers d'un lit fixe, immergé, de matériau granulaire chargé en biomasse, caractérisé en ce que, immédiatement avant ladite filtration, on complète l'oxygènation de l'eau polluée avec de l'air, en déversant gravitairement, en chute verticale, l'eau polluée directement au-dessus des moyens d'alimentation en eau polluée du lit en partie basse.

Une telle disposition qui entraîne notamment l'apparition de microbulles d'air dans l'eau à épurer, va permettre ainsi une épuration par la biomasse de façon particulièrement simple et efficace.

Dans des modes de réalisation avantageux, on a, de plus, recours à l'une et/ou à l'autre des dispositions suivantes :

– on évacue l'eau purifiée par trop plein en partie haute du lit de matériau granulaire;

– on laisse décanter en continu les déchets insolubles ou précipités issus de la filtration, en dessous du lit de matériau, simultanément à l'alimentation en eau polluée du lit en partie basse;

– on réalise des chasses périodiques des déchets décantés par entraînement gravitaire des déchets par l'eau polluée.

L'invention propose également un dispositif de mise en oeuvre du procédé selon l'invention caractérisé en ce qu'il comporte :

– un réacteur vertical muni d'une partie supérieure ouverte à l'air libre, de rétention et de support du lit de matériau granulaire chargé en biomasse,

– des moyens d'évacuation par trop plein de l'eau purifiée en partie haute du lit de matériau granulaire, et

– des moyens d'alimentation en eau polluée du lit en partie basse, comprenant une canalisation de traversée du lit de matériau granulaire par l'eau polluée oxygénée, ladite canalisation étant munie d'une partie d'extrémité inférieure débouchant en-dessous du lit, et d'une partie d'extrémité supérieure, débouchant au-dessus du lit et agencée pour recevoir l'eau polluée alimentée gravitairement en chute, et des moyens déverseurs, d'alimentation en chute , de l'eau polluée directement au dessus de la dite partie d'extrémité supérieure.

Avantageusement le réacteur comporte une partie inférieure de décantation, lors de la filtration, de déchets

insolubles ou précipités, et des moyens de vidange du réacteur agencés pour éliminer ces déchets décantés par entrainement gravitaire des déchets à l'aide de l'eau polluée.

Dans un mode de réalisation avantageux la partie supérieure du réacteur est cylindrique, la canalisation d'alimentation en eau polluée étant constituée par un tuyau central agencé pour recevoir en partie supérieure l'eau polluée alimentée en chute, la partie inférieure de décantation du réacteur étant conique ou sensiblement conique, et munie, en sommet de cône, d'une canalisation de vidange des déchets par entrainement.

Dans un mode de réalisation avantageux, le tuyau central est muni de moyens de mesure indiquant le colmatage progressif du filtre ou lit de matériau granulaire.

Avantageusement, le dispositif est mobile ou amovible, ce qui permet de le déplacer pour traiter les eaux polluées à des emplacements différents. Il peut ainsi être utilisé par exemple en cas de pollution accidentelle nécessitant un déplacement rapide du dispositif sur les lieux de la pollution.

L'invention sera mieux comprise à la lecture d'un mode de réalisation particulier de l'invention, donné à titre d'exemple non limitatif. Il se réfère aux dessins qui l'accompagnent dans lesquels :

– La figure 1 est une vue schématique d'une installation de purification comprenant un dispositif selon l'invention, appliqué à l'épuration des eaux provenant d'un élevage de poissons.

– La figure 2 est une vue schématique en élévation, et en coupe, du mode de réalisation du dispositif de l'invention plus particulièrement décrit ici.

– La figure 3 est une vue de dessus de la figure 2.

Sur la figure 1 on a représenté schématiquement des bacs 1 de culture de poissons 2. Ces bacs déversent en continu l'eau 3 polluée par les déchets organiques provenant des cultures, via des déversoirs 9, dans une canalisation 5, disposée en pente douce, et ouverte à l'air libre. L'eau à traiter s'écoule gravitairement dans cette canalisation jusqu'à un bac de décantation 6 de type connu. Le bac 6 comprend un trop plein 7 d'évacuation de l'eau polluée, après décantation, dans une seconde canalisation 8, en pente, également ouverte à l'air libre, permettant l'acheminement de l'eau à traiter jusqu'à l'extrémité 9 de la canalisation, extrémitée située directement au-dessus et à distance du dispositif 10 de filtration. L'acheminement de l'eau polluée à l'air libre dans le canal 8 permet une première oxygénation de l'eau avant son arrivée à l'extrémité 9.

L'eau à épurer se déverse ensuite gravitairement à partir de l'extrémité 9, en chute verticale 11, sur une distance de plusieurs centimètres, par exemple de l'ordre de 50cm, au dessus du dispositif 10 qui sera plus particulièrement décrit en référence à la figure 2.

La chute libre de l'eau sur plusieurs centimètres complète son oxygénation, le taux d'oxygène dissous avant la chute d'eau devant être supérieur à de l'ordre de 50% du taux de saturation en oxygène de l'eau pour qu'il y ait bon fonctionnement du filtre. L'eau arrive ainsi suffisamment oxygénée en partie basse 12 des moyens d'alimentation du lit chargé en biomasse 13.

L'eau polluée, située en partie basse, est ensuite chassée (principe des vases communicant) vers le haut, selon le trajet indiqué par les flêches 14, au travers de la biomasse bactérienne 13 fixée sur un support filtrant par exemple constitué d'argile expansé.

Les caractéristiques techniques d'un tel argile sont par exemple les suivantes :

granulométrie :comprise entre 8mm et 16mm (moyenne 12mm).
Porosité externe moyenne: 55%
Porosité interne moyenne: 6%
Taille des pores ....... 2 à 3$\mu$
Composition ....... $Al_2O_3$ : 38% (de l'ordre de)
....... $SiO_2$ : 58% (de l'ordre de)
....... $FeO_3$, $TiO_2$, divers : 4% (de l'ordre de).

En même temps que la filtration mécanique assurée par ce support filtrant, s'effectue donc une épuration bactériologique des déchets présents dans l'eau (urée, matières organiques...), la biomase bactérienne étant, quant-à-elle, constituée de plus d'une centaines de micro-organismes différents, comprenant essentiellement des bactéries désignées sous les dénominations Nitrosomas et Nitrobacter.

Plus précisément, l'épuration bactériologique consiste à minéraliser les composés azotés, cette épuration

s'effectuant en deux phases : une première phase d'ammonification et une deuxième phase de nitrification.

L'ammonification consiste à décomposer les protéines et molécules organiques en acides aminés et composés organiques de bases.

Par exemple, la décomposition de l'urée excrétée par les branchies de poissons donne :

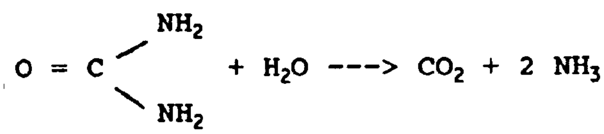

La nitrification quant à elle, s'effectue en deux étapes :

$NH_3$ + Bactéries Nitrosomas ------> $NO_2$

$NO_2$ + Bactéries Nitrobacter ------> $NO_3$

Simultanément à l'épuration, une lente décantation des produits solides, notamment ceux entrainés dans la chute 11, s'effectue en partie inférieure 15 du dispositif.

Des moyens de vidange 16, et des moyens de récupération 17, des déchets accumulés, sont prévus.

Le dispositif 10 comprend un trop plein 18, d'évacuation de l'eau épurée en partie haute, éventuellement connecté à un circuit 19 de recyclage de l'eau propre dans les bacs 1.

On va maintenant se référer plus précisément aux figures 2 et 3 en utilisant des numéros de référence identiques à ceux désignant les mêmes éléments dans la figure 1, quand il y a lieu.

Le dispositif 10 selon le mode de réalisation de l'invention plus particulièrement décrit ici, comprend un réacteur 20, par exemple en acier inoxydable, ou un matériau composite du type matière plastique armée, résine armée de fibres de verre, etc.. muni d'une partie supérieure cylindrique 21 ouverte à l'air libre, de rétention et de support du lit 22 de matériau granulaire 23, par exemple constitué d'argile expansé, chargé en biomasse 13.

Le lit 22 est maintenu entre deux grilles, une grille inférieure 24 de support du lit et une grille supérieure 25 de protection, amovible, par exemple constituées par des grilles en forme de tamis de maille 0,5mm x 0,5mm, par exemple en acier inoxydable ou en matériau composite du type matière plastique armée de fils métalliques.

Les moyens 18 d'évacuation par trop plein de l'eau purifiée en partie haute sont constitués par une rigole ou goulotte périphérique 26 fixée, par exemple par soudage, en partie haute 27 de la partie supérieure cylindrique 21, et agencée pour récupérer l'eau épurée qui se déverse par trop plein, par dessus l'extrémité 28 de la partie supérieure 21.

Un tube 29, de vidange de la rigole 26, est prévu.

Le dispositif, selon le mode réalisation de l'invention plus particulièrement décrit ici, comprend également des moyens 30 d'alimentation en eau polluée en partie basse 12 du lit, comportant un tuyau central 31, cylindrique, par exemple constitué en matière plastique du type connu sous la dénomination PVC. Le tuyau 31 est muni en partie haute 32, d'une jupe, ou entonnoir 33, de réception de l'eau polluée alimentée en chute. La partie basse 12 du tuyau 31, débouche en dessous ou au niveau de la grille 24 de support du lit.

Le réacteur 20 comprend par ailleurs une partie inférieure 15, de décantation des déchets lors de la filtration, de forme conique. Le sommet 34 du cone comporte une canalisation 35, au moins en partie verticale à partir du dit sommet, de vidange des déchets par entrainement, munie d'une vanne 36.

Dans un mode de réalisation avantageux, le tuyau 31 est muni de moyens de mesure 37 indiquant le colmatage progressif du filtre, moyens par exemple constitués par des lames ou ailettes de longueurs croissantes vers le haut, placées dans la partie interne supérieure 39 du tube 31. Au fur et à mesure du colmatage, et donc de l'augmentation de la perte de charge due au filtre, le niveau d'eau dans le tuyau, initialement similaire au niveau de la grille supérieure 25, monte et recouvre les ailettes.

Visuellement, ou par tatonnement manuel, on peut alors mesurer de façon simple le degré de colmatage du dispositif, ou filtre, et décider, de procéder à la vidange pour décolmatage du dit filtre.

Le dispositif comprend également des moyens 40 de support du réacteur, constitués de façon connue en soi, et permettant, par exemple, le déplacement aisé du réacteur.

on va maintenant décrire plus précisément les conditions de fonctionnement du procédé selon l'invention.

Ce procédé nécessite pour fonctionner de façon satisfaisante, une bonne aération ou oxygénation de l'eau, avant la chute, eau qui doit être saturée comme on l'a vu à plus de 50% en oxygène dissous.

Le procédé selon l'invention permet le respect de telles contraintes.

Les autres conditions de fonctionnement sont les suivantes.

Concernant le PH, un PH compris entre 6,5 et 8 permet une bonne activité des bactéries.

Par contre, un PH=5 va entraîner le blocage du métabolisme des bactéries, même si celles-ci gardent la possibilité de récupérer leur activité lorsque les conditions du milieu redeviennent correctes.

La nitrification engendrant par ailleur des ions acides, une neutralisation régulière est prévue, par exemple par apport de bicarbonate

$$(H^+ + HCO_3 \text{ ---> } CO_2 + H_2O).$$

En ce qui concerne l'oxygène nécessaire, les réactions principales sont les suivantes :

Nitrosomas :

$$55\ NH_4^+ + 5\ CO_2 + 102\ O_2 \text{ --> } C_5H_7O_2N + 54NO_2 + 52H_2O + 109H^+$$

Nitrobacter :

$$400\ NO_2 + 5\ CO_2 + NH_4^+ + 195\ O_2 + 2H_2O \text{-->} C_5H_7O_2N + 400\ NO_3 + H^+$$

Le procédé selon l'invention, en permettant le maintien à un taux d'oxygène suffisant, rend ainsi l'épuration possible et efficace. Le taux de renouvellement de la biomasse, tout comme la charge polluante, sont par ailleurs simultanément contrôlés de façon connue, et de façon à respecter les conditions optimum d'épuration pour les eaux polluées de caractéristiques déterminées.

Enfin, il convient de tenir compte de la température, sachant que la capacité de Nitrification varie avec la température, de 0,16g $NH_3/m^3$/jour à 9,5°C, à 2,10g $NH_3/m^3$/jour à 22°C; la nitrification est également plus rapide en eau douce, qu'en eau de mer.

On va maintenant décrire la mise en oeuvre du procédé pour un système d'élevage d'anguilles "en grossissement", en se référant plus précisément à la figure 1, avec un exemple numérique donné à titre nullement limitatif.

Chaque bac 1 d'élevage d'anguilles, a par exemple un volume de $10m^3$, pour une quantité d'anguilles par bac de l'ordre de 350Kg, avec un poids unitaire moyen d'anguille de 90g.

Le taux de renouvellement d'eau par bassin est par exemple de 8 fois par 24h; la production de polluant ($NH_3$) est de l'ordre de 300g par 24h, et par bac.

Le dispositif 10 est intégré dans une chaîne de traitement d'eau comprenant, en amont du dispositif, une préfiltration mécanique (non représentée), éliminant la plus grande partie des MES (Matières En Suspensions), par exemple de l'ordre de 80%, et une prédécantation (bac 6). La chaine comprend, en aval du dispositif, un dégazage de l'eau et des moyens de régulation thermique, (non représentés) avant recyclage par le circuit 19.

Avec un PH moyen de 7 dans la chaine de traitement, le procédé selon le mode de réalisation plus particulièrement décrit ici, va permettre de réduire la quantité de $NH_3$ de 2mg/l à 0,5mg/l, et la quantité de $NO_2$ de 1 à 0,1mg/l.

Ainsi, pour 1t d'anguilles, un dispositif de volume total de l'ordre de $5m^3$, et de volume de biomasse de $0,8m^3$, peut par exemple être prévu.

L'eau polluée des bacs 1 se déverse tout d'abord par trop plein dans le bac de décentation 6 via la canalisation 5. Celle-ci est ouverte à l'air libre, et agencée pour permettre l'oxygénation de l'eau polluée avec un taux d'oxygène dissous dans l'eau au moins égal à 50%. L'eau polluée ainsi oxygénée se déverse ensuite en chute verticale 11, directement en partie basse, ce qui entraine un brassage et une émulsion importante, entre l'eau polluée et l'air, comme on l'a vu.

La filtration par passage de bas en haut de l'eau au travers du lit 13, suivant les flèches 14 s'effectue ensuite avec une vitesse de percolation, (débit/surface de matière filtrante) par exemple de $5m^3/h$ par $m^2$ de filtration, le bon fonctionnement du procédé, dans le cas de l'exemple considéré, nécessitant une vitesse de percolation inférieure à de l'ordre de 9m/h.

L'eau épurée est évacuée par le trop plein 18 avant, d'être recyclée vers les bacs 1 par l'intermédiaire du circuit 19, connu en lui même.

Périodiquement, on réalise des chasses de déchets décantés par entrainement gravitaire des déchets, grace aux moyens 16. Les déchets formés de boues minéralisées sont très riches en micro-organismes et constituent un matériau biologique pouvant être utilisé comme engrais, après sèchage.

Comme il va de soi, et comme il résulte d'ailleurs de ce qui précède, l'invention n'est nullement limitée au mode de réalisation plus particulièrement décrit, mais en embrasse au contraire toutes les variantes, notament celle où la canalisation 31 n'est pas centrée par rapport au dispositif.

## Revendications

1. Procédé de purification d'une eau polluée en déchets azotés solubles et insolubles par traitement physico-chimique et biologique, comprenant la filtration par passage de bas en haut de l'eau au travers d'un lit (22) fixe, immergé, de matériau granulaire (23) chargé en biomasse (13), caractérisé en ce que, directement avant filtration, on complète l'oxygènation de l'eau polluée avec de l'air, en déversant gravitairement, en chute verticale (11), l'eau polluée au-dessus des moyens (30) d'alimentation du lit en partie basse (12).

**2.** Procédé de purification selon la revendication 1, caractérisé en ce qu'on évacue l'eau purifiée par trop plein (18) en partie supérieure du lit de matériau granulaire.

**3.** Procédé de prufication selon l'une quelconque des revendications précédentes, caractérisé en ce qu'on laisse décanter en continu les déchets insolubles ou précipités issus de la filtration, en dessous du lit de matériau, simultanément à l'alimentation en eau polluée du lit en partie basse.

**4.** Procédé selon la revendication 3, caractérisé en ce qu'on réalise des chasses périodiques des déchets décantés par entraînement gravitaire des déchets par l'eau polluée.

**5.** Dispositif de purification d'une eau polluée en déchets azotés solubles et insolubles par traitement physico-chimique et biologique, caractérisé en ce qu'il comporte :
– un réacteur vertical (20) muni d'une partie supérieure (21) ouverte à l'air libre, de rétention et de support d'un lit (22) fixe, immergé de matériau granulaire (23) chargé en biomasse (13),
– des moyens d'évacuation (18) par trop plein de l'eau purifiée en partie haute du lit de matériau granulaire,
– des moyens (30) d'alimentation en eau polluée du lit en partie basse (12), comprenant une canalisation (31) de traversée du lit de matériau granulaire par l'eau polluée, ladite canalisation étant munie d'une partie d'extrémité inférieure (12), débouchant en-dessous du lit, et d'une partie d'extrémité supérieure (32), débouchant au-dessus du lit et agencée pour recevoir l'eau polluée alimentée gravitairement en chute, et des moyens déverseurs (8, 9), d'alimentation en chute de l'eau polluée directement au dessus de la dite canalisation.

**6.** Dispositif selon la revendication 5, caractérisé en ce que le réacteur comporte une partie inférieure (15) de décantation, lors de la filtration, des déchets insolubles ou précipités, et des moyens de vidange (16, 35, 36) du réacteur, agencés pour éliminer ces déchets décantés par entrainement gravitaire des déchets à l'aide de l'eau polluée.

**7.** Dispositif selon l'une quelconque des revendications 5 et 6, caractérisé en ce que la partie supérieure (21) du réacteur (20) est cylindrique, la canalisation d'alimentation en eau polluée étant constituée par un tuyau central (30) et la partie inférieure (15) de décantation du réacteur est conique ou sensiblement conique, et est munie en sommet (34) de cône d'une canalisation (35) de vidange des déchets par entrainement.

**8.** Dispositif selon la revendication 7 caractérisé en ce que le tuyau central (31) est muni de moyens de mesure (37) indiquant le colmatage progressif du lit (22) de matériau granulaire.

**9.** Dispositif selon l'une quelconque des revendications 5, 6, 7 et 8 caractérisé en ce qu'il est mobile ou amovible.

**10.** Application du procédé ou du dispositif selon l'une quelconque des revendications précédentes à la purification des eaux polluées provenant de l'élevage intensif ou semi-intensif de poissons (2), ou du traitement de déchets agricoles issus de déjections animales.

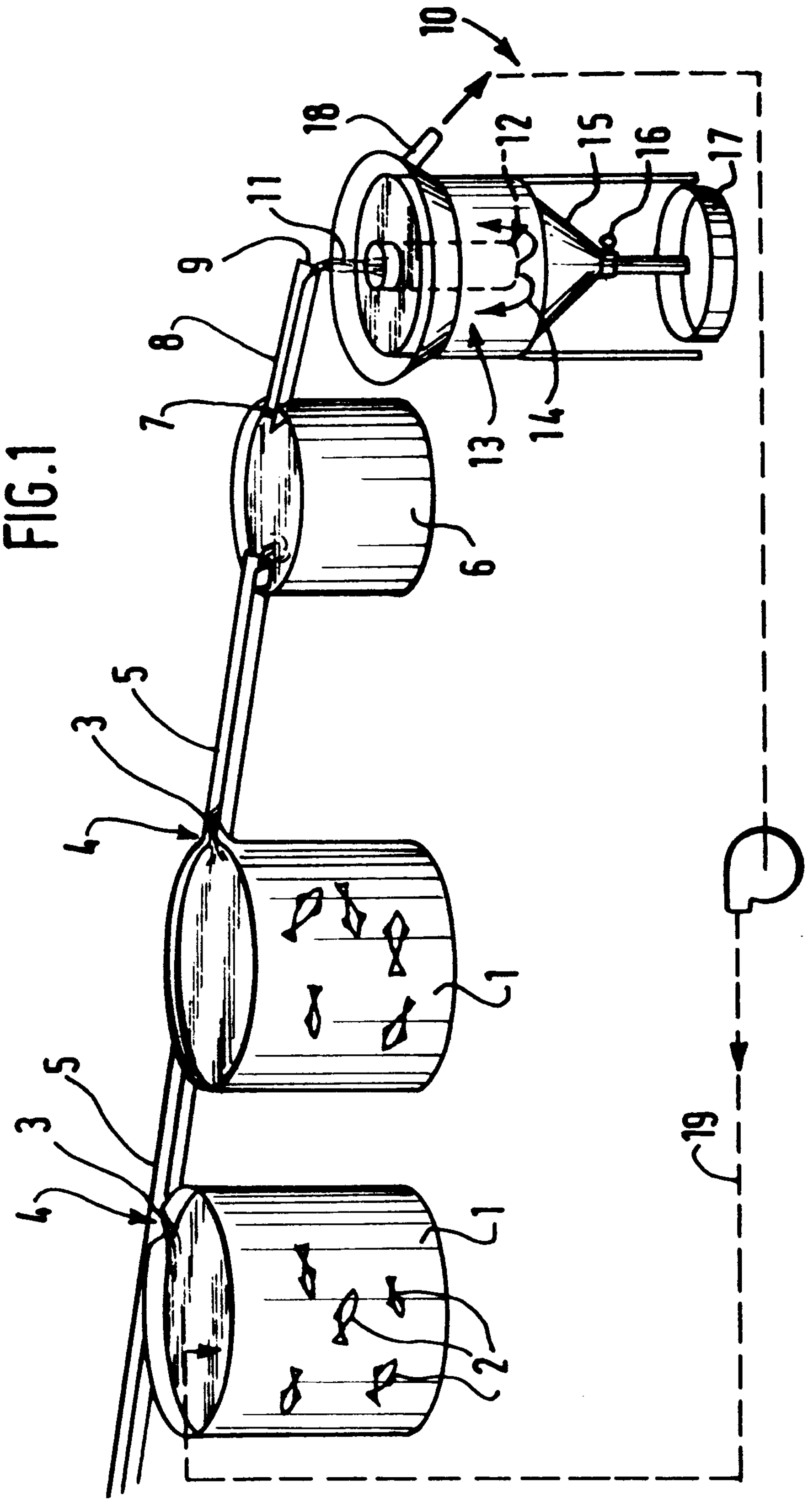


FIG.1

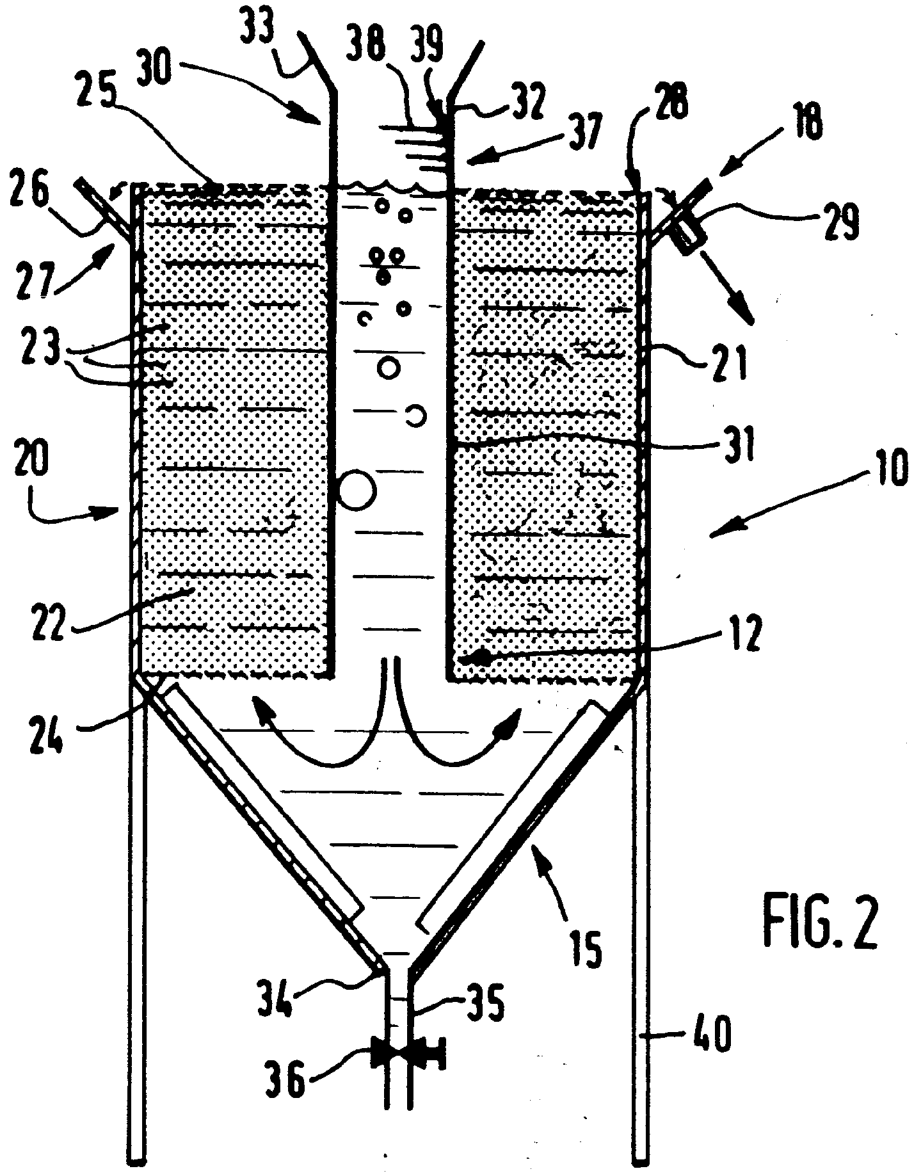
33
38
39
30
25
32
37
28
18
26
29
27
23
21
31
20
10
22
12
24
15
34
35
36
40

FIG. 2

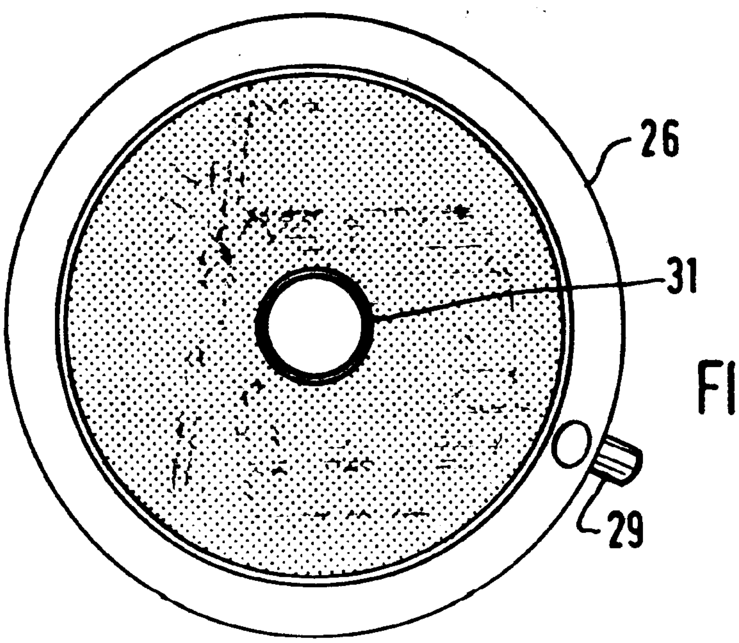
26
31
29

FIG.3

Office européen des brevets

# RAPPORT DE RECHERCHE EUROPEENNE

Numero de la demande

EP 91 40 1735

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | US-A-4 411 780 (NIPON SANGYO KIKAI K.K.)<br>* Colonne 2, ligne 64 - colonne 3, ligne 21; colonne 3, lignes 46-66; figure 1 *<br>--- | 1-3,5-7 | C 02 F 3/06<br>C 02 F 3/24<br>A 01 K 63/04 |
| Y | DE-A-1 928 730 (INSTITUT FÜR WASSERWIRTSCHAFT)<br>* Page 7, revendication 1; figure 1 *<br>--- | 1-3,5-7 | |
| A | EP-A-0 306 053 (TECON)<br>* Colonne 3, ligne 51 - colonne 4, ligne 43 *<br>--- | 1-3,5-7 | |
| A | EP-A-0 227 081 (IWTS CONSULTING ENGINEERS)<br>* Colonne 3, ligne 31 - colonne 4, ligne 10; colonne 4, ligne 35 - colonne 5, ligne 34 *<br>--- | 1-7 | |
| A | DE-A-3 816 679 (IBL INTERNATIONAL BIOTECHNOLOGY LABORATORIES)<br>* Colonne 4, revendications 1,7,9,10; colonne 3, lignes 48-51 *<br>--- | 1,8 | **DOMAINES TECHNIQUES RECHERCHES (Int. Cl.5)** |
| D,A | FR-A-2 604 990 (OTV)<br>* Page de garde, abrégé *<br>----- | 1 | C 02 F<br>A 01 K |

Le présent rapport a été établi pour toutes les revendications

| Lieu de la recherche | Date d'achèvement de la recherche | Examinateur |
|---|---|---|
| LA HAYE | 03-10-1991 | TEPLY J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)